# EUROPÄISCHE PATENTSCHRIFT

(11) **EP 1 484 265 B1**
(45) Veröffentlichungstag und Bekanntmachung des Hinweises auf die Patenterteilung: **25.07.2007**
(21) Anmeldenummer: 04010164.4
(22) Anmeldetag: 29.04.2004
(51) Int. Cl.: B65G 1/08, B65G 47/88

(54) **Vorrichtung zum Zurückhalten von auf einer geneigten Rollenbahn ablaufendem Transportgut**
Device for holding back pallets along an inclined roller path
Dispositif pour retenir des palettes sur un transporteur à rouleaux incliné

(30) Priorität: 05.06.2003 DE 20308782 U
(43) Veröffentlichungstag der Anmeldung: 08.12.2004
(73) Patentinhaber: Fritz Schäfer GmbH, 57290 Neunkirchen (DE)
(72) Erfinder: Schäfer, Gerhard, 57290 Neunkirchen (DE)
(74) Vertreter: Grosse, Wolf-Dietrich Rüdiger

(56) Entgegenhaltungen:
- DE-A1- 1 956 159
- DE-A1- 3 035 338
- DE-A1- 3 129 318
- DE-A1- 4 309 222
- DE-A1- 4 425 269
- GB-A- 2 236 294
- US-A- 5 890 577

## Beschreibung

Die Erfindung betrifft eine Vorrichtung zum Zurückhalten von auf einer geneigten Rollenbahn, bestehend aus zwei im Abstand parallel voneinander angeordneten Rollenschienen, ablaufendem Transportgut wie Werkstückträger, Behälter oder Paletten, umfassend einen an der Entnahmeseite vorgesehenen, mit einem Rückhaltemittel über die Laufbahnebene hinaus in die Rollenbahn hochragenden, langgestreckten Wipphebel, wobei das vordere, entnahmeseitige Wipphebelende mit einem schwanenhalsartig ansteigenden Schrägabschnitt ausgebildet ist und am hinteren, das Rückhaltemittel aufweisenden Wipphebelende ein Zugelemant angreift, wie durch die DE 19 56 159 A1 bekanntgeworden.

Bei einer durch das DE 299 08 066 U1 bekanntgewordenen Vorrichtung für insbesondere die Rollenbahn eines Durchlaufregals dient zur Vereinzelung des Transportguts bzw. der auf der zur Entnahmeseite hin abfallenden Rollenbahn selbsttätig ablaufenden Paletten und zur Sicherstellung, dass eine nachfolgende Palette zurückgehalten wird, bis die vorderste Palette die Rollenbahn verlassen hat, das am hinteren Ende des Wipphebels vorgesehene Rückhalteelement. Dieses ragt in den Förderweg hinein und hält eine dahinter angeordnete Palette an ihrer Vorderkante zurück. Wenn der etwa in seiner Mitte schwenkbeweglich gelagerte Wlpphebel hingegen so verschwenkt wird, dass das Rückhalteelement unter die Förder- bzw. Laufbahnebene abtaucht, kann die nachfolgende Palette zur Entnahmeseite hin ablaufen. Dieser Vorgang wird aber nicht automatisch ausgelöst, sondern erfordert die Betätigung eines auf den Wipphebel einwirkenden Mechanismus durch eine Bedienungsperson.

Der Erfindung liegt daher die Aufgabe zugrunde, eine Vorrichtung der eingangs genannten Art zu schaffen, die mit geringem Aufwand ohne manuelle Tätigkeit ein sicheres Vereinzeln bzw. Zurückhalten des Transportguts ermöglicht.

Diese Aufgabe wird erfindungsgemäß dadurch gelöst, dass sich ein dem Schrägabschnitt anschließendes Hebelendstück in der niedergedrückten Position des vorderen Wipphebelendes in Höhe der Laufbahnebene erstreckt, wobei es den Wipphebel über die Länge des Werkstückträgers hinaus nach vorne verlängert, und das Rückhaltemittel des in dieser Position hochgestellten hinteren Wipphebelendes die Laufbahnebene mit einem mindestens der Aushubhöhe zur Auslagerung des Transportgutes entsprechenden Maß überragt. Es lässt sich damit sicherstellen, dass die Sperre erst dann freigegeben wird, wenn das Transportgut die Rollenbahn, z. B. ein Kanal eines Regals, tatsächlich vollständig verlassen hat. Das vordere Wipphebelende stellt sich mit der Entlastung durch das Anheben und Herausziehen des Förderguts, wozu in der Entnahmeposition angeordnete, übliche Fördergeräte eingesetzt werden, zwar entsprechend der Aushubhöhe nach oben, jedoch ragt das Rückhaltemittel unverändert zumindest so weit in die Laufbahnebene hinein, dass ein Folge-Transportgut die Sperre nicht überwinden und in die Entnahmeposition ablaufen kann. Das ist erst möglich, wenn das Transportgut vollständig herausgezogen worden ist und das den Wipphebel über die Entnahmeposition hinaus verlängernde Hebelendstück keinen Kontakt mehr mit der Unterseite des herausgezogenen Transportgutes hat. In diesem Moment zieht das Zugmittel das hintere Wipphebelende mit seinem Rückhaltemittel unter die einen freien Ablauf für das Folge-Transportgut gewährleistende Laufbahnebene.

Nach einem Vorschlag der Erfindung ist das Rückhaltemittel des Wipphebels, von denen an jeder Rollenbahnschiene innenseitig einer angeordnet ist, an seiner dem Transportgut zugewandten Anschlagfläche sich von unten nach oben verjüngend ausgebildet. Es liegt damit quasi ein Freischnitt vor, der es dem Rückhaltemittel ermöglicht, beim Aushub des Transportgutes und damit einhergehender Verlagerung des Wipphebels ungehindert von dem unverändert anliegenden Folge-Transportgut bis in die niedrigere Sperrposition abzugleiten.

Ein weiterer Vorschlag der Erfindung sieht zwischen der Rollenbahnschiene und dem Wipphebel angeordnete Wipphebelführungselemente vor. Diese jeweils nahe der Wipphebelenden befestigten Führungselemente dienen als Abweiser bzw. Abstandhalter und verhindern, dass die Wipphebel während ihrer Schwenkbewegungen an die seitlich aus den Rollenschienen vorspringenden Schraubköpfe der Rollenlagerungen anschlagen. Die erfindungsgemäße Wipphebel-Mechanik lässt sich im übrigen an jede gelochte Rollenschiene bzw.-leiste nachrüsten.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Figur 1: von einem weiter nicht gezeigten Regal als Einzelheit eine von zwei parallel beabstandeten Rollenschienen gebildete Rollenbahn mit darauf befindlichem Werkstückträger als Transportgut, von der Entnahmeseite des Regals her gesehen;
- Figur 2: die Rollenbahn nach Figur 1 im Schnitt entlang der Linie II-II; und
- Figur 3: die Draufsicht der Figur 2.

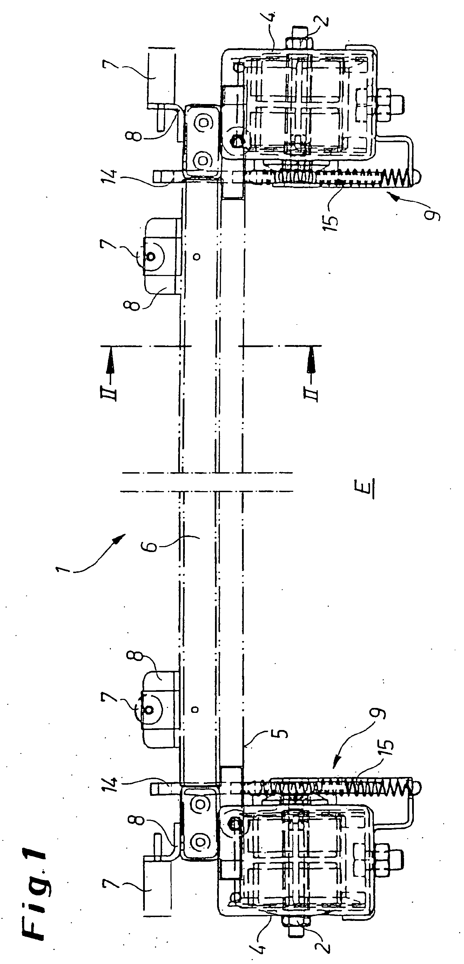

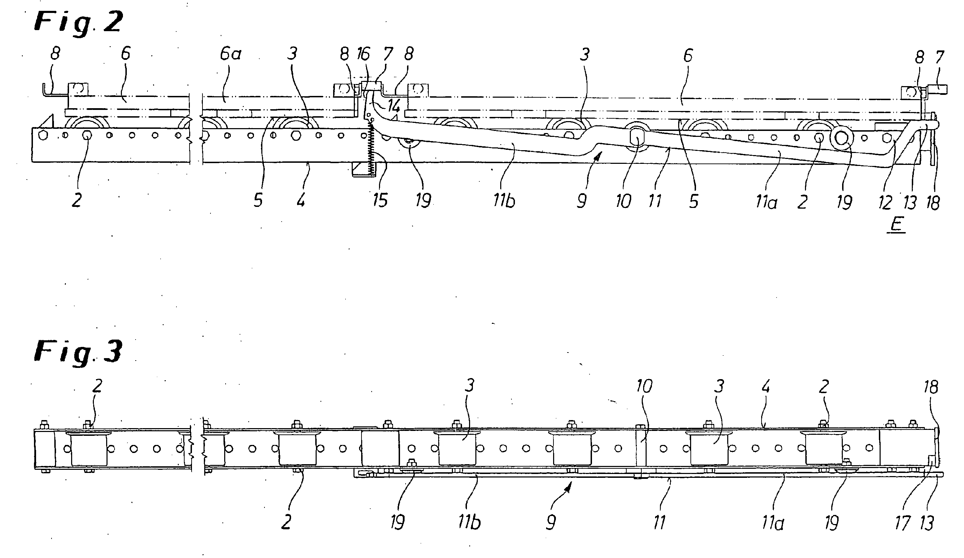

Ein Kanal bzw. eine Rollenbahn 1 eines nicht dargestellten Regals, insbesondere ein Durchlaufregal mit Neigung der Rollenbahn zur Entnahmeseite, besteht im Ausführungsbeispiel aus zwei im Abstand parallel voneinander angeordneten, mit zahlreichen durch Schrauben 2 befestigte Spurrollen 3 (vgl. die Figuren 2 und 3) bestückten Rollenschienen 4. Auf der von den Spurrollen 3 bereitgestellten Laufbahnebene 5 laufen zur Entnahmeseite E (vgl. auch Figur 2) hin als Transportgut im Ausführungsbeispiel schematisch, strichpunktiert eingezeichnete Werkstückträger 6 selbsttätig ab. Die Werkstückträger 6 bestimmter Länge sind an ihren vorderen, voreilenden Enden mit Puffer 7 aufweisenden und an ihren rückwärtigen Enden ungepufferten Abstandsblechen 8 versehen. Aufgrund wechselnder Einsatzrichtungen sind die Werkstückträger 6 in den Eckbereichen aller ihrer vier Stirnseiten mit solchen gepufferten und ungepufferten Abstandsblechen 8 ausgerüstet (vgl. Figur 1).

Den Rollenschienen 4 sind innenseitig und damit einander gegenüberliegend Sperrmechanismen 9 zugeordnet. Diese bestehen aus einem zweiarmigen, in etwa seiner Mitte um eine Schwenkachse 10 selbsttätig verschwenkbaren Wipphebel 11, wie näher der Figur 2 zu entnehmen ist. Das vordere, entnahmeseitige Wipphebelende 11a ist mit einem schwanenhalsartig ansteigenden Schrägabschnitt 12 ausgebildet, der in ein gradlinig abgewinkeltes Hebelendstück 13 übergeht, das den Wipphebel 11 über die Länge des Werkstückträgers 6 hinaus nach vorne verlängert. An das hintere Wipphebelende 11 a ist ein fingerartig hochragendes Rückhaltemittel 14 angeformt, und außerdem greift dort eine Zugfeder 15 an. Die Rückseite des Rückhaltemittels 14 ist als eine sich von unten nach oben verjüngende Anschlagfläche 16 ausgebildet.

In der Betriebssituation nach Figur 2 ist ein Werkstückträger6 an einen mit einem Puffer 17 versehenen Anschlag 18 (vgl. Figur 3) der Entnahmeseite E aufgelaufen. Beim vorherigen Auftreffen und Abgleiten über den Schrägabschnitt 12 hat der Werkstückträger 6 den Kipphebel 11 im Uhrzeigersinn verschwenkt, so dass sich das vordere Wipphebelende 11 a in seiner niedergedrückten Lage befindet, in der die Oberfläche des Hebelendstückes 13 in einer Linie mit der Laufbahnebene 5 liegt. Einhergehend mit dieser Schwenkbewegung hat sich das hintere Wipphebelende 11 b unter Spannung der Zugfeder 15 in seine mit dem Rückhaltemittel 14 weit über die Laufbahnebene 5 hochragende Sperrposition verstellt, so dass ein Folge-Werkstückträger 6a vereinzelt und zurückgehalten wird. Das Rückhaltemittel 14 liegt dem Folge-Werkstückträger 6a an seinem unteren Punkt an.

Der die Länge des Werkstückträgers 6 beidseitig geringfügig überschreitende, langgestreckte, schmale Wipphebel 11 gibt die Sperre für einen Folge-Werkstückträger 6a erst dann zum Abgleiten in die Entnahmeposition E frei, wenn der dort befindlichen Werkstückträger 6 völlig aus dem Regal herausgezogen worden ist. Denn erst dann kann der von dem Gewicht des Werkstückträgers 6 gänzlich entlastete Wipphebel 11 unter der Kraft der Zugfeder 15 im Gegenuhrzeigersinn um seine Schwenkachse 10 so weit nach unten verlagert werden, dass das Rückhaltemittel 14 unter die Förderebene 5 abtaucht. Bis dahin hält das obere Ende des Rückhaltemittels 14 den Folge-Werkstückträger 6a in seiner Ausgangsposition.

Die Konturgebung der Anschlagfläche 16 des Rückhaltemittels bietet den Freiraum bei dennoch stetiger Sperrung des Folge-Werkstückträgers 6a zum Abgleiten bis letztendlich in die völlig entsperrte Position. Sobald dann der Folge-Werkstückträger 6a in die Entnahmeposition E abläuft, wird mit dem Auftreffen des Folge-Werkstückträgers 6a auf den Schrägabschnitt 12 des vorderen Wipphebelendes 11a die umgekehrte Schwenkbewegung des Wipphebels 11, d.h. im Uhrzeigersinn bis in die in Figur 2 gezeigte Sperrlage eingeleitet.

Bei den Schwenkbewegungen der Wipphebel 11 werden diese von in den Rollenschienen 4 jeweils im Bereich des vorderen und hinteren Wipphebelendes 11a, 11 b angeschraubten Wipphebelführungselementen 19 auf den nötigen Abstand zu den Köpfen der Spurrollen-Befestigungsschrauben 2 gehalten und können diese somit ungehindert passieren.

## Patentansprüche

1. Vorrichtung zum Zurückhalten von auf einer geneigten Rollenbahn (11), bestehend aus zwei im Abstand parallel voneinander angeordneten Rollenschienen (4), ablaufendem Transportgut wie Werkstückträger (6), Behälter oder Paletten, umfassend einen an der Entnahmeseite (E) vorgesehenen, mit einem Rückhaltemittel (14) über die Laufbahnebene hinaus in die Rollenbahn (1) hochragenden, langgestreckten Wipphebel (11), wobei das vordere, entnahmeseitige Wipphebelende (11a) mit einem schwanenhalsartig ansteigenden Schrägabschnitt (12) ausgebildet ist und am hinteren, das Rückhaltemittel (14) aufweisenden Wipphebelende (11b) ein Zugelement (15) angreift,
**dadurch gekennzeichnet,**
**daß** sich ein dem Schrägabschnitt (12) anschließendes Hebelendstück (13) in der niedergedrückten Position des vorderen Wipphebelendes (11a) in Höhe der Laufbahnebene (5) erstreckt, wobei es den Wipphebel (11) über die Länge des Werkstückträgers (6) hinaus nach vorne verlängert, und das Rückhaltemittel (14) des in dieser Position hochgestellten hinteren Wipphebelendes (11b) die Laufbahnebene (5) mit einem mindestens der Aushubhöhe zur Auslagerung des Transportgutes entsprechenden Maß überragt.

2. Vorrichtung nach Anspruch 1,
**dadurch gekennzeichnet,**
**daß** das Rückhaltemittel (14) einstückig mit dem hinteren Wipphebelende (11b) ausgebildet ist.

3. Vorrichtung nach Anspruch 1 oder 2,
**dadurch gekennzeichnet,**
**daß** das Rückhaltemittel (14) an seiner dem Transportgut (6,6a) zugewandten Anschlagfläche (16) sich von unten nach oben verjüngend ausgebildet ist.

4. Vorrichtung nach Anspruch 1,
**gekennzeichnet durch**
eine Zugfeder (15) als Zugelement.

5. Vorrichtung nach einem der Ansprüche 1 bis 4,
**dadurch gekennzeichnet,**
**daß** an Jeder Rollenbahnschiene (4) innenseltig ein Wipphebel (11) angeordnet ist.

6. Vorrichtung nach einem der Ansprüche 1 bis 5,
**gekennzeichnet durch**
zwischen der Rollenbahnschiene (4) und dem Wipphebel (11) angeordnete Wipphebeiführungselemente (19).

## Claims

1. A device for retaining transported goods such as tool carriers (6), containers or pallets running on an inclined roller conveyor (11) consisting of two roller rails (4) arranged at a distance and parallel to one another, comprising an elongated rocker lever (1) provided at the removal side (E) and projecting with a retaining means (14) over the plane of the running track into the roller conveyor (11), wherein the front rocker-lever end (11a) on the removal side is configured with a swan-neck-like ascending oblique section (12) and a tension element (15) acts on the rear rocker-lever end (11b) having the retaining means (14), **characterised in that** in the pressed-down position of the front rocker-lever end (11a), a lever end piece (13) adjoining the oblique section (12) extends at the height of the running-track plane (5), wherein it lengthens the rocker lever (11) beyond the length of the tool carrier (6) towards the front and the retaining means (14) of the rear rocker-lever end (11b) which is raised in this position, projects over the running-track plane (5) to an extent which at least corresponds to the lift-off height for retrieval of the transported goods.

2. The device according to claim 1, **characterised in that** the retaining means (14) is constructed in one piece with the rear rocker-lever end (11b).

3. The device according to claim 1 or 2, **characterised in that** the retaining means (14) is configured on its face (16) facing the transported material (6, 6a) so that it tapers from bottom to top.

4. The device according to claim 1, **characterised by** a tension spring (15) as the tension element.

5. The device according to any one of claims 1 to 4, **characterised in that** a rocker lever (11) is arranged on the inside on each roller conveyor rail (4).

6. The device according to any one of claims 1 to 5, **characterised in that** rocker lever guide elements (19) are arranged between the roller conveyer rail (4) and the rocker lever (11).

## Revendications

1. Dispositif de retenue d'un produit à transporter comme des porte-pièce (6), des conteneurs ou des palettes circulant sur un transrouleur (11) incliné, consistant en deux rouleaux de convoyeur (4) disposé à la parallèle avec un écart, comprenant un levier basculant allongé (11) prévu sur le côté de retrait (E), saillant par un moyen de retenue (14) par dessus le plan de la voie de roulement (1), jusque dans le transrouleur (1), l'extrémité antérieure (11a) située du côté retrait du levier basculant étant conçue avec un tronçon incliné (12) croissant, du type d'un col de cygne et un élément de traction (15) s'accrochant sur l'extrémité postérieure (11b) du levier basculant, comportant le moyen de retenue (14),
**caractérisé en ce que**,
lorsque l'extrémité antérieure (11a) du levier basculant est poussée vers le bas, une pièce d'extrémité du levier (13) se raccordant sur le tronçon incliné (12) s'étend à hauteur du plan de la voie de roulement (5), en prolongeant le levier basculant (11) vers l'avant, par delà la longueur du porte-pièce (6) et **en ce que** le moyen de retenue (14) de l'extrémité postérieure (11b) du levier basculant qui est relevée dans cette position saillit par dessus le plan de la voie de roulement (5) dans une dimension correspondant au moins à la hauteur de levée pour le transfert du produit à transporter.

2. Dispositif selon la revendication 1,
**caractérisé en ce que** le moyen de retenue (14) est conçu en monobloc avec l'extrémité postérieure (11b) du levier basculant.

3. Dispositif selon la revendication 1 ou 2,
**caractérisé en ce que**, sur sa surface de butée (16) qui fait face au produit à transporter (6, 6a), le moyen de retenue (14) est conçu en s'effilant du bas vers le haut.

4. Dispositif selon la revendication 1,
**caractérisé par** un ressort de traction (15) sur l'élément de traction.

5. Dispositif selon l'une quelconque des revendications 1 à 4,
**caractérisé en ce que**, sur la face interne de chaque rouleau de convoyeur (4) est disposé un levier basculant (11).

6. Dispositif selon l'une quelconque des revendications 1 à 5,
**caractérisé par** des éléments de guidage du levier basculant (19) placés entre le rouleau de convoyeur (4) et le levier basculant (11).
